# EUROPEAN PATENT APPLICATION

(11) **EP 4 804 540 A1**
(43) Date of publication of application: **09.09.2026**
(21) Application number: 24886485.2
(22) Date of filing: 01.11.2024
(51) Int. Cl.: H04N 21/431, H04N 21/85, G06F 3/048, G11B 27/10

(54) **MULTIMEDIA MATERIAL EDITING METHOD AND APPARATUS, AND ELECTRONIC DEVICE AND READABLE STORAGE MEDIUM**

(30) Priority: 03.11.2023 CN 202311460043
(71) Applicant: Lemon Inc., Grand Cayman, KY1-1205 (KY)
(72) Inventor: MA, Xiaotong, Beijing 100028 (CN); LI, Yujie, Beijing 100028 (CN)
(74) Representative: Grünecker Patent- und Rechtsanwälte PartG mbB
(86) International application number: PCT/SG2024/050707
(87) International publication number: WO 2025/095867

(57) **Abstract**

The present disclosure relates to a multimedia material editing method and apparatus, and an electronic device and a readable storage medium. The method in the present disclosure comprises: displaying information of a first multimedia material in a first track according to the duration of the first multimedia material, and displaying information of a second multimedia material in a second track according to the duration of the second multimedia material, wherein the first multimedia material and the second multimedia material are multimedia materials to be synthesized, and the duration of the first multimedia material is greater than or equal to the duration of the second multimedia material; receiving a trigger operation from a user, wherein the trigger operation is used for triggering automatic selection of the information of the first multimedia material; and displaying in the first track a first selection region for automatically selecting the information of the first multimedia material, wherein the duration of a segment of the first multimedia material corresponding to the range of the first selection region is equal to the duration of the second multimedia material.

## Description

### CROSS-REFERENCE TO RELATED APPLICATIONS

The present application is based on and claims priority of CN Application No. 202311460043.3, filed on November 3, 2023, the disclosure of which is incorporated by reference herein in its entirety.

### TECHNICAL FIELD

The present disclosure relates to the field of computer technologies, and in particular, to an editing method and apparatus for multimedia material, an electronic device, and a readable storage medium.

### BACKGROUND

At present, when synthesizing multiple multimedia materials, lengths of the multimedia materials are usually different, and a user needs to manually cut the multiple multimedia materials to the same length before synthesis can be performed. For example, in a case where the user adds music to a video, if a length of the music is greater than a length of the video, the user needs to manually adjust the music to the same length as the video and cut the music before the music can be synthesized with the video.

### SUMMARY

The part of the summary is provided so as to introduce the concept in a brief form, and these concepts will be described in detail in the following part of detailed description. The part of the summary is not intended to identify the key features or necessary features of the claimed technical solution, nor is it intended to limit the scope of the claimed technical solution required.

According to some embodiments of the present disclosure, an editing method of multimedia material is provided, including: displaying, in a first track, information of a first multimedia material according to a duration of the first multimedia material, and displaying, in a second track, information of a second multimedia material according to a duration of the second multimedia material, where the first multimedia material and the second multimedia material are multimedia materials to be synthesized, and the duration of the first multimedia material is greater than or equal to the duration of the second multimedia material; receiving a triggering operation of a user, where the triggering operation is configured to trigger an automatic selection for the information of the first multimedia material; and displaying, in the first track, a first selected region automatically selected for the information of the first multimedia material, where a range of the first selected region is aligned with a display range of the information of the second multimedia material, and a duration of a clip of the first multimedia material corresponding to the range of the first selected region is equal to the duration of the second multimedia material.

According to other embodiments of the present disclosure, an editing apparatus of multimedia material is provided, including: a receiving module and a display module, where: the display module is configured to display, in a first track, information of a first multimedia material according to a duration of the first multimedia material, and display, in a second track, information of a second multimedia material according to a duration of the second multimedia material, where the first multimedia material and the second multimedia material are multimedia materials to be synthesized, and the duration of the first multimedia material is greater than or equal to the duration of the second multimedia material; the receiving module is configured to receive a triggering operation of a user, where the triggering operation is configured to trigger an automatic selection for the information of the first multimedia material; and the display module is further configured to display , in the first track, a first selected region automatically selected for the information of the first multimedia material, where a range of the first selected region is aligned with a display range of the information of the second multimedia material, and a duration of a clip of the first multimedia material corresponding to the range of the first selected region is equal to the duration of the second multimedia material.

According to still other embodiments of the present disclosure, an electronic device is provided, including: a processor; and a memory coupled to the processor and configured to store instructions, where the instructions, when executed by the processor, cause the processor to perform the editing method of multimedia material according to any embodiment of the present disclosure.

According to yet other embodiments of the present disclosure, a computer-readable storage medium is provided, where a computer program is stored on the computer-readable storage medium, where the computer program, when executed by a processor, implements the editing method of multimedia material according to any embodiment of the present disclosure.

According to still other embodiments of the present disclosure, a computer program is provided, including instructions, when the instructions are executed by a processor, the processor is caused to implement the editing method of multimedia material according to any embodiment of the present disclosure.

According to yet other embodiments of the present disclosure, a computer program product is provided, including instructions, when the instructions are executed by a processor, the processor is caused to implement the editing method of multimedia material according to any embodiment of the present disclosure.

Other features and advantages of the present disclosure will become clear through the following detailed description of the exemplary embodiments of the present disclosure with reference to the drawings.

### BRIEF DESCRIPTION OF THE DRAWINGS

Preferred embodiments of the present disclosure are explained hereunder with reference to the drawings. The drawings explained here are used to provide a further understanding of the present disclosure, and each drawing, together with the following specific description, is included in and forms a part of this specification for explaining the present disclosure. It should be understood that the drawings in the following description merely relate to some embodiments of the present disclosure, rather than limiting the present disclosure. In the drawings:
Fig. 1 shows a schematic flowchart of an editing method of multimedia material according to some embodiments of the present disclosure;
Fig. 2 shows a schematic diagram of an interface according to some embodiments of the present disclosure;
Fig. 3 shows a schematic diagram of an interface according to other embodiments of the present disclosure;
Fig. 4 shows a schematic diagram of an interface according to still other embodiments of the present disclosure;
Fig. 5 shows a schematic diagram of an interface according to yet other embodiments of the present disclosure;
Fig. 6 shows a schematic flowchart of an editing method of multimedia material according to other embodiments of the present disclosure;
Fig. 7 shows a schematic flowchart of an editing method of multimedia material according to still other embodiments of the present disclosure;
Fig. 8 shows a schematic diagram of an interface according to still other embodiments of the present disclosure;
Fig. 9 shows a schematic structural diagram of an editing apparatus of multimedia material according to some embodiments of the present disclosure;
Fig. 10 shows a schematic structural diagram of an electronic device according to some embodiments of the present disclosure;
Fig. 11 shows a schematic structural diagram of a computer system according to some embodiments of the present disclosure.

It should be understood that, for ease of description, the dimensions of various parts shown in the drawings are not necessarily drawn according to an actual proportional relationship. In each drawing, the same or similar reference numerals are used to represent the same or similar components. Therefore, once an item is defined in one drawing, it may not be further discussed in subsequent drawings.

### DETAILED DESCRIPTION

The technical solutions in the embodiments of the present disclosure will be described clearly and completely with reference to the drawings in the embodiments of the present disclosure, but obviously, the described embodiments are only some embodiments of the present disclosure, rather than all embodiments. The following description of the embodiments is actually only illustrative, and in no way serves as any limitation on the present disclosure and its application or use. It should be understood that the present disclosure may be implemented in various forms and should not be construed as limited to the embodiments set forth herein.

It should be understood that steps described in method implementations of the present disclosure may be performed in different orders and/or in parallel. In addition, the method implementations may include additional steps and/or omit the steps shown. The scope of the present disclosure is not limited in this regard. Unless otherwise specifically stated, relative arrangements, numerical expressions and values of components and steps set forth in these embodiments should be construed as merely exemplary and do not limit the scope of the present disclosure.

The term "include/comprise" and its variants used in the present disclosure mean open terms that at least include the following elements/features, but do not exclude other elements/features, that is, "include/comprise but not limited to". In addition, the term "contain" and its variants used in the present disclosure mean open terms that at least contain the following elements/features, but do not exclude other elements/features, that is, "contain but not limited to". Therefore, "include/comprise" is synonymous with "contain". The term "based on" means "at least partially based on".

References to "an embodiment", "some embodiments" or "the embodiment" throughout the specification mean that specific features, structures or characteristics described in connection with the embodiments are included in at least one embodiment of the present disclosure. For example, the term "an embodiment" means "at least one embodiment"; the term "another embodiment" means "at least one additional embodiment"; the term "some embodiments" means "at least some embodiments". Moreover, appearances of the phrases "in an embodiment", "in some embodiments" or "in the embodiment" in various places throughout the specification are not necessarily all referring to the same embodiment, but may also refer to the same embodiment.

It should be noted that concepts such as "first" and "second" mentioned in the present disclosure are only used to distinguish different apparatuses, modules or units, and are not used to limit an order or interdependence of functions performed by these apparatuses, modules or units. Unless otherwise specified, concepts such as "first" and "second" are not intended to imply that objects described in such a manner must be in a given order temporally, spatially, in ranking or in any other manner.

It should be noted that modifications of "one" and "a plurality of" mentioned in the present disclosure are illustrative rather than restrictive, and those skilled in the art should understand that they should be understood as "one or more", unless otherwise explicitly specified in the context.

Names of messages or information exchanged between multiple apparatuses in the implementations of the present disclosure are only used for illustrative purposes, and are not used to limit the scope of these messages or information.

Embodiments of the present disclosure are described in detail hereunder with reference to the drawings, but the present disclosure is not limited to these specific embodiments. The following specific embodiments may be combined with each other, and the same or similar concepts or processes may not be repeated in some embodiments. In addition, in one or more embodiments, specific features, structures or characteristics may be combined in any suitable manner that will be clear to those of ordinary skill in the art from the present disclosure.

The inventors have found that it is difficult for a user to quickly and accurately adjust multimedia materials to the same length by manually adjusting and cutting the multimedia materials. In view of this, a technical problem to be solved by the present disclosure is: how to more efficiently and accurately adjust multimedia materials to be synthesized.

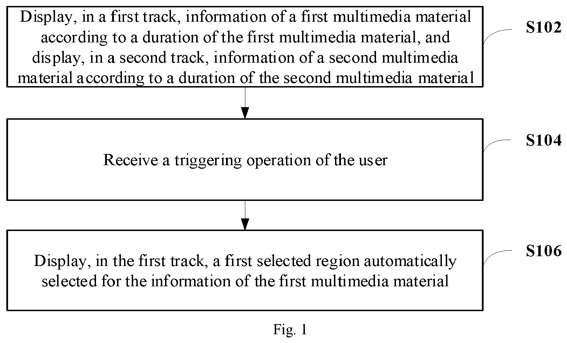

The present disclosure provides an editing method of multimedia material, which is described hereunder with reference to FIGS. 1 to 8.

Fig. 1 is a flowchart of some embodiments of an editing method of multimedia material according to the present disclosure. As shown in Fig. 1, the method in this embodiment includes steps S102 to S106.

In step S102, information of a first multimedia material is displayed in a first track, according to a duration of the first multimedia material, and information of a second multimedia material is displayed in a second track, according to a duration of the second multimedia material.

Before step S102, the method may further include receiving a triggering operation of a user on an editing interface. In some embodiments, the triggering operation on the editing interface is a triggering operation for displaying the editing interface after the second multimedia material for synthesis is added to the first multimedia material, or a triggering operation for displaying the editing interface after the first multimedia material for synthesis is added to the second multimedia material, or a triggering operation for displaying the editing interface after a plurality of multimedia materials are added, which is not limited to the examples given herein.

For example, a selection of the user is received of the first multimedia material for an editing operation, the information of the first multimedia material is displayed according to the duration of the first multimedia material in the first track in the editing interface, the user's adding operation is received, candidate multimedia materials are displayed or a search interface is displayed, the user's determining operation on the second multimedia material is received, and the editing interface is displayed.

For another example, a selection of the user of the first multimedia material and the second multimedia material among candidate multimedia materials is received, prompt information indicating that the first multimedia material and the second multimedia material are selected is displayed, the user's triggering operation of an editing function is received, and the editing interface is displayed.

In the present disclosure, the user's operations may be implemented in various forms such as clicking a control and voice operation, which is not limited herein.

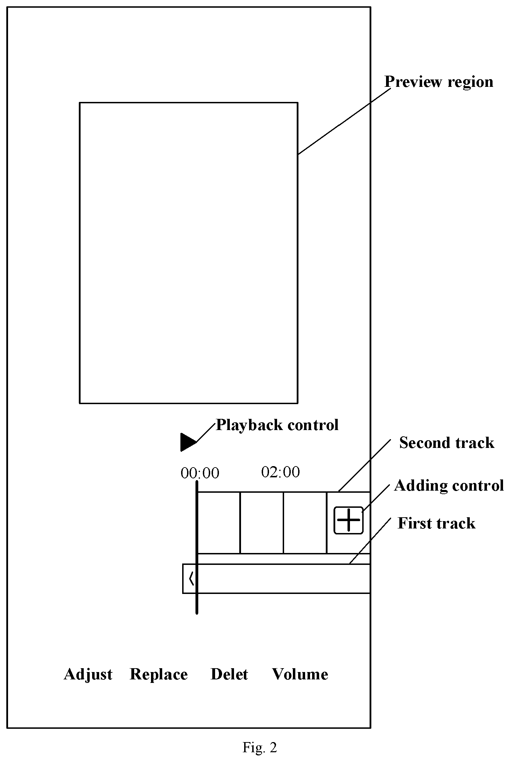

For example, as shown in Fig. 2, start ends of the first track and the second track are aligned, and the first track and the second track are displayed in a parallel arrangement. The up-down positions of the first track and the second track are not limited. The information of the first multimedia material in the first track and the information of the second multimedia material in the second track may be completely displayed, or may support scrollable display. For example, in a case where the information of the first multimedia material or the information of the second multimedia material exceeds a preset length, a part with the preset length is displayed, and the remaining part may be displayed by sliding. For example, the user may display the part that is not displayed by sliding left and right, and may change a playback start time of the first multimedia material.

The first multimedia material and the second multimedia material with the same duration correspond to the same display length. Meanwhile, one or more time identifications may be correspondingly displayed with the first track and/or the second track, and the one or more time identifications may be used to indicate at least one of one or more durations of one or more clips or a complete duration of the first multimedia material and the second multimedia material. As shown in Fig. 2, the editing interface may further include a preview region of a synthesized multimedia material and a playback control. The user's triggering operation on the playback control is received, and the synthesized multimedia material may be played in the preview region.

As shown in Fig. 2, an adding control may further be displayed in the editing interface, which is used to add multimedia material. The user's triggering operation on the adding control is received, and information of a third multimedia material is displayed according to a duration of the third multimedia material in a third track. The multimedia material may also be added in other ways, which is not limited to the example given herein.

As shown in Fig. 2, at least one of a replacing control, a deleting control and a volume control may further be displayed in the editing interface. The replacing control may be used to replace the added multimedia material. The user's triggering operation on the replacing control is received, candidate multimedia materials are displayed, the user's selecting operation on any multimedia material is received, and the added multimedia material is replaced. For example, in a case where the first multimedia material is added to the second multimedia material, the replacing control may be used to replace the first multimedia material. The deleting control may be used to delete the added multimedia material. The user's triggering operation on the deleting control is received, and the added multimedia material and a track corresponding to the added multimedia material are deleted. The deleting control may also be used to delete a plurality of multimedia materials at the same time. The volume control may be used to adjust the volume of the added multimedia material, or the volume control may be used to adjust the volume of the first multimedia material and/or the second multimedia material, or the volume control may be used to adjust the volume of the synthesized multimedia material. The editing interface may further include a speed adjustment control, which may adjust the speed of the added multimedia material, or the speed control may be used to adjust the speed of the first multimedia material and/or the second multimedia material, or the speed control may be used to adjust the speed of the synthesized multimedia material. The functions of these controls may be replaced in other forms, for example, replacement by voice instruction, or adjustment of volume, speed, etc. by double-clicking, pressing and other operations, which is not limited to the examples given herein.

In some embodiments, the first multimedia material and the second multimedia material are multimedia materials to be synthesized, the first multimedia material is a video, an audio, an image or an effect material, and the second multimedia material is a video, an audio, an image or an effect material. The effect material is, for example, a subtitle, an effect, a text, a sticker, etc., which is not limited to the example given herein. A plurality of multimedia materials of any type may be synthesized and edited.

In some embodiments, the information of the first multimedia material includes at least one of one or more images or texts corresponding to the first multimedia material; and the information of the second multimedia material includes at least one of one or more images or texts corresponding to the second multimedia material.

For example, in a case where the first multimedia material is an audio, the information of the first multimedia material displayed in the first track is at least one of a waveform diagram or a name text. For another example, in a case where the second multimedia material is a video, the information of the second multimedia material displayed in the second track is a plurality of frames of images, and the plurality of frames of images may be thumbnails of the plurality of frames of images extracted from the video according to a preset sampling interval, for example, one frame of image is extracted every 0.1 second.

A first length of the information of the first multimedia material displayed in the first track is proportional to a first duration of the first multimedia material; a second length of the information of the second multimedia material displayed in the second track is proportional to a second duration of the second multimedia material, and a ratio of the first length to the first duration is equal to a ratio of the second length to the second duration.

In step S104, a triggering operation of the user is received.

For example, the triggering operation is configured to trigger an automatic selection for the information of the first multimedia material. As shown in Fig. 2, an adjustment control may be set, and the user's triggering operation on the adjustment control is received. Alternatively, the user's selecting operation on the first multimedia material and the triggering operation on the adjustment control are received. Alternatively, an operation such as clicking or double-clicking on the first track or the second track may be used as the triggering operation, and the specific form of the triggering operation is not limited.

In step S106, a first selected region automatically selected for the information of the first multimedia material is displayed in the first track, where a range of the first selected region is aligned with a display range of the information of the second multimedia material, and a duration of a clip of the first multimedia material corresponding to the range of the first selected region is equal to the duration of the second multimedia material.

Alignment of two ranges may mean that the two ranges have the same length and are correspondingly displayed.

Step S104 is optional. After receiving the user's triggering operation on the editing interface, the information of the first multimedia material may be displayed according to the duration of the first multimedia material in the first track, the information of the second multimedia material may be displayed according to the duration of the second multimedia material in the second track, and the first selected region automatically selected for the information of the first multimedia material may be displayed in the first track.

The duration of the first multimedia material is greater than or equal to the duration of the second multimedia material, that is, the display range of the information of the first multimedia material is greater than or equal to the display range of the information of the second multimedia material. The range of the first selected region is aligned with the display range of the information of the second multimedia material, and the duration of the clip of the first multimedia material corresponding to the range of the first selected region is equal to the duration of the second multimedia material. In the first track, the display range of the information of the first multimedia material that is aligned with the display range of the information of the second multimedia material is automatically selected as the first selected region.

In some embodiments, whether the first multimedia material is trimmed or not is determined; a start point of the first multimedia material is taken as a start point of the first selected region, in response to the first multimedia material being not trimmed, and an end point of the first selected region is determined according to an end point of the information of the second multimedia material; a start point of the trimmed first multimedia material is taken as the start point of the first selected region, and the end point of the first selected region is determined according to the start point of the first selected region and the duration of the second multimedia material; and the first selected region is displayed according to the start point and the end point of the first selected region.

Whether the first multimedia material is trimmed or not may be determined according to a record of whether the first selected region is adjusted or a record of the user's trimming operation.

In some embodiments, part of information of the first multimedia material in the first selected region and part of information of the first multimedia material outside the first selected region are displayed with different display effects. For example, masks with different transparency or different colors are used inside and outside the first selected region. For another example, the first selected region may be shown in the form of a window, a selection box, etc.

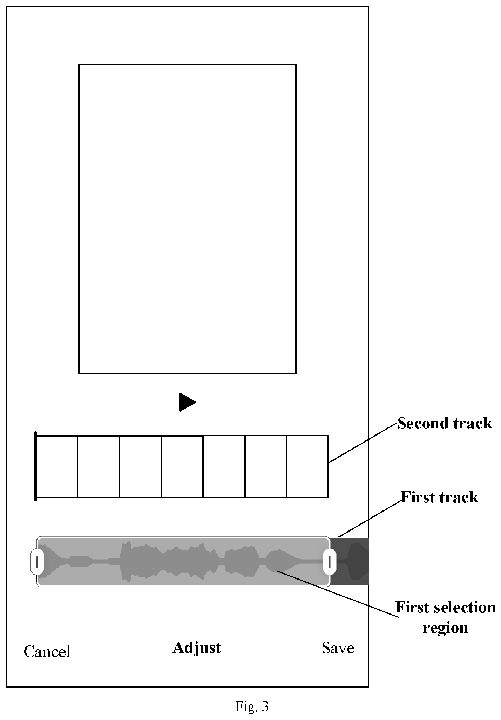

As shown in Fig. 3, taking the first multimedia material being an audio and the second multimedia material being a video as an example, in a case where the duration of the audio is greater than the duration of the video, the first selected region is displayed in the first track, and the range of the first selected region is aligned with the display range of the images of the video. The first selected region and the second multimedia material may be completely displayed in the interface, which is convenient for the user to view. The information of the first multimedia material outside the first selected region may be partially displayed, and the information displayed in the first track may be adjusted as a whole by the sliding operation. Fig. 2 and Fig. 3 may be the same interface or different interfaces, which is not limited herein. In the subsequent embodiments, the editing interface is used for description, but those skilled in the art may understand that a first editing interface may be displayed before the triggering operation, and a second editing interface may be displayed after the triggering operation.

In some embodiments, a second selected region of selection of the information of the second multimedia material is displayed in the second track, where the range of the first selected region is aligned with a range of the second selected region.

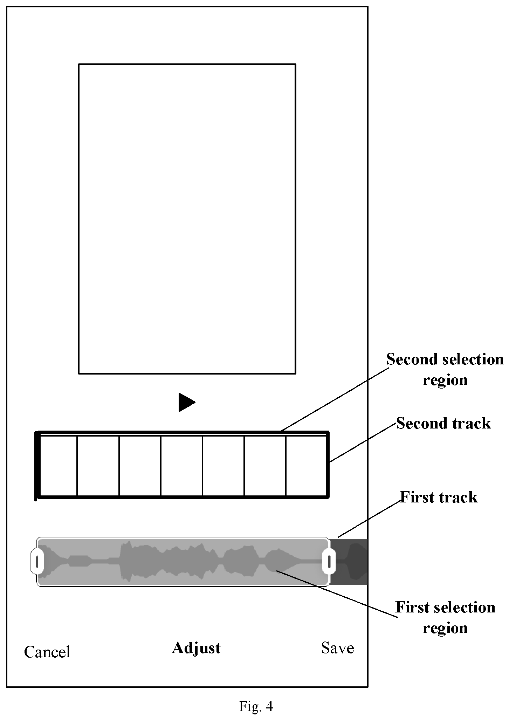

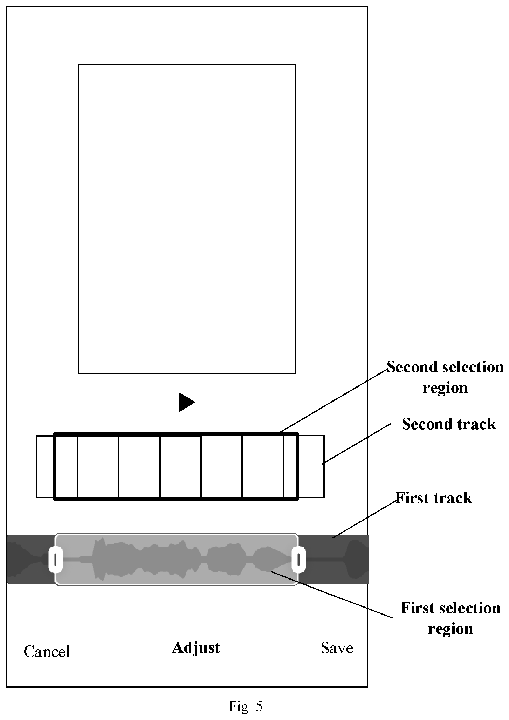

The second selected region may be selected according to the user's operation or automatically selected. In a case where the second selected region is displayed in the second track, the range of the first selected region is aligned with the range of the second selected region. In a case where the second selected region is not displayed in the second track, the range of the first selected region is aligned with the display range of the information of the second multimedia material. The range of the second selected region may include the entire display range or a partial display range of the information of the second multimedia material. As shown in Fig. 4, the range of the second selected region covers the entire display range of the information of the second multimedia material. As shown in Fig. 5, the range of the second selected region covers the partial display range of the information of the second multimedia material.

In some embodiments, in a case where the duration of the first multimedia material is equal to the duration of the second multimedia material, the second selected region is not displayed in the second track; in a case where the duration of the first multimedia material is greater than the duration of the second multimedia material, the second selected region is displayed in the second track; and in a case where the duration of the first multimedia material is less than the duration of the second multimedia material, the second selected region is displayed in the second track.

In a case where the duration of the first multimedia material is less than the duration of the second multimedia material, the first selected region may not be displayed, only the second selected region is displayed, or the first selected region and the second selected region may be displayed at the same time. The range of the first selected region is aligned with the range of the second selected region, and the range of the first selected region may include the entire display range or the partial display range of the information of the first multimedia material. The multimedia material with a short duration may be completely displayed in the corresponding track, which is convenient for the user to view.

In the above embodiments, one or more first multimedia materials may exist, and each first multimedia material may be correspondingly displayed with one first selected region, which will not be repeated herein.

In the method of the above embodiment, the information of the first multimedia material is displayed in the first track, the information of the second multimedia material is displayed in the second track, and the information of the first multimedia material and the information of the second multimedia material are correspondingly displayed in time. The user's triggering operation is received to trigger the automatic selection of the information of the first multimedia material, and the first selected region of the automatic selection of the information of the first multimedia material is displayed in the first track. The first selected region is aligned with the display range of the information of the second multimedia material. Through the method of the above embodiment, the first selected region with the same length as the shorter second multimedia material may be automatically selected and displayed in the longer first multimedia material, and the first selected region is aligned with the display range of the information of the second multimedia material. The user does not need to manually adjust the first multimedia material, and the length alignment of the plurality of multimedia materials may be quickly and accurately realized, thus improving the efficiency and accuracy of adjusting the multimedia materials to be synthesized.

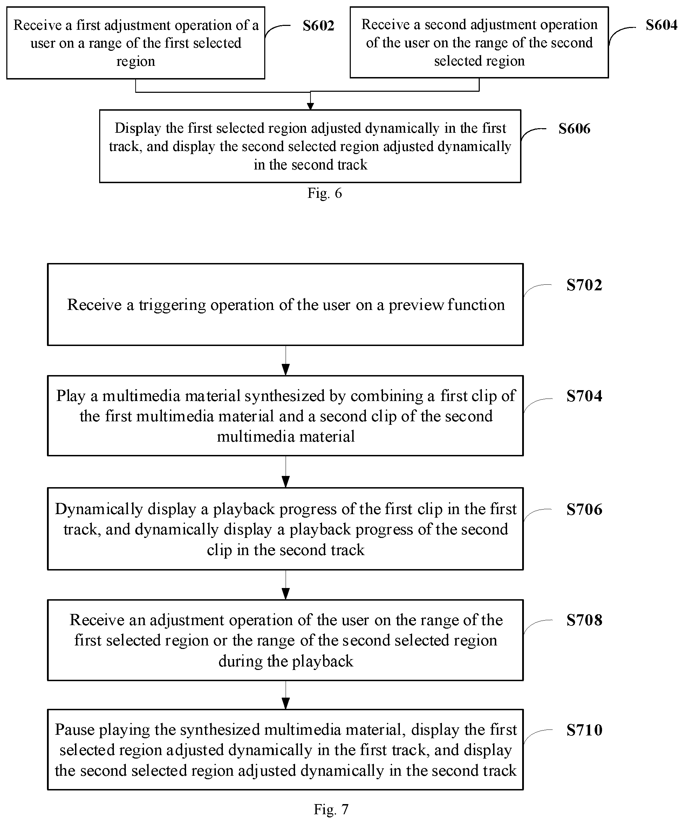

Other embodiments of the editing method of multimedia material according to the present disclosure are described hereunder with reference to Fig. 6.

Fig. 6 is a flowchart of other embodiments of an editing method of multimedia material according to the present disclosure. As shown in Fig. 6, the method in this embodiment includes steps S602 to S606.

In step S602, a first adjustment operation of a user on a range of the first selected region is received.

For example, a first adjustment operation of the user on an edge of the first selected region is received.

As shown in FIGS. 4 and 5, an edge control may be set at the edge of the first selected region, and the range of the first selected region may be adjusted by operating the edge control; or the range of the first selected region may be adjusted by a sliding operation on a window or a selection box corresponding to the first selected region. The range of the first selected region is adjusted, indicating that a start position and/or an end position of the clip of the first multimedia material selected for synthesis is adjusted.

In some embodiments, in response to the user adjusting the edge of the first selected region to an edge of the information of the first multimedia material, first prompt information is output, where the first prompt information is used to prompt that the edge of the first selected region cannot exceed the edge of the information of the first multimedia material; and/or in response to the user adjusting the range of the first selected region to a first minimum range, second prompt information is output, where the second prompt information is used to prompt that the range of the first selected region cannot be narrowed down any more.

The first prompt information and the second prompt information may be in the form of text, sound, image, vibration, etc., which is not limited to the examples given herein. The maximum range of the first selected region is the entire display range of the information of the first multimedia material, and the minimum range of the first selected region may be preset, for example, a display range corresponding to 0.1 second.

In step S604, a second adjustment operation of the user on the range of the second selected region is received.

For example, a second adjustment operation of the user on an edge of the second selected region is received. For example, an edge control may be set at the edge of the second selected region, and the range of the first selected region may be adjusted by operating the edge control; or the range of the second selected region may be adjusted by a sliding operation on a window or a selection box corresponding to the second selected region. The range of the second selected region is adjusted, indicating that a start position and/or an end position of the clip of the second multimedia material selected for synthesis is adjusted.

In some embodiments, in response to the user adjusting the edge of the second selected region to an edge of the information of the second multimedia material, third prompt information is output, where the third prompt information is used to prompt that the edge of the second selected region cannot exceed the edge of the information of the second multimedia material; and in response to the user adjusting the range of the second selected region to a second minimum range, fourth prompt information is output, where the fourth prompt information is used to prompt that the range of the second selected region cannot be narrowed down any more.

The third prompt information and the fourth prompt information may be in the form of text, sound, image, vibration, etc., which is not limited to the examples given herein. The maximum range of the second selected region is the entire display range of the information of the second multimedia material, and the minimum range of the second selected region may be preset.

The range of the first selected region and the range of the second selected region may be adjusted in different manners. For example, the edge of the first selected region is provided with the edge control, and a window or selection box corresponding to the second selected region supports the sliding operation, which is not limited to the example given herein. The first selected region and the second selected region may be automatically adjusted together, and during the adjustment, the first selected region and the second selected region do not exceed their respective maximum and minimum ranges.

In step S606, the first selected region adjusted dynamically is displayed in the first track, and the second selected region adjusted dynamically is displayed in the second track.

For example, in a case where the first adjustment operation of the user on the range of the first selected region is received, the adjusted first selected region is dynamically displayed in the first track by following the first adjustment operation, and the second selected region dynamically adjusted by following an adjustment of the first selected region is displayed in the second track; and in a case where the second adjustment operation of the user on the range of the second selected region is received, the adjusted second selected region is dynamically displayed in the second track by following the second adjustment operation, and the first selected region adjusted by following an adjustment of the second selected region is displayed in the first track.

The range of the first selected region is dynamically aligned with the range of the second selected region. The first selected region and the second selected region may be dynamically adjusted and displayed together. When one of the regions is adjusted, the other region may be automatically adjusted together, and the two regions always remain aligned in position.

In the method of the above embodiment, the two regions of the first selected region and the second selected region may be dynamically adjusted by adjusting either the first selected region or the second selected region, thus improving the efficiency and accuracy of adjusting the multimedia materials to be synthesized.

In some embodiments, a movement operation of the user on the information of the first multimedia material in the first track relative to the first selected region is received; and the information of the first multimedia material moving relative to the first selected region is dynamically displayed in the first track, where the first selected region is fixed in position relative to the first track.

For example, a sliding operation is performed on the information of the first multimedia material in the first track. The first selected region is fixed in position relative to the first track, so that the clip of the first multimedia material corresponding to the first selected region is changed, that is, the selected clip of the first multimedia material is changed. The first selected region is fixed in position relative to the first track, and the position of the second selected region is not changed, so that only the clip of the first multimedia material corresponding to the first selected region may be changed, while the clip of the second multimedia material corresponding to the second selected region remains unchanged.

In some embodiments, a movement operation of the user on the information of the second multimedia material in the second track relative to the second selected region is received; and the information of the second multimedia material moving relative to the second selected region is dynamically displayed in the second track, where the second selected region is fixed in position relative to the second track.

For example, a sliding operation is performed on the information of the second multimedia material in the second track. The second selected region is fixed in position relative to the second track, so that the clip of the second multimedia material corresponding to the second selected region is changed, that is, the selected clip of the second multimedia material is changed.

Through the adjustment operation on the range of the first selected region or the range of the second selected region, and the movement operation on the information of the first multimedia material in the first track or the movement operation on the information of the second multimedia material in the second track, any clip of the first multimedia material may be combined and synthesized with any clip of the second multimedia material, thus improving the flexibility of multimedia material synthesis and the efficiency and accuracy of adjusting the multimedia materials to be synthesized.

Still other embodiments of the editing method of multimedia material according to the present disclosure are described hereunder with reference to Fig. 7.

Fig. 7 is a flowchart of still other embodiments of an editing method of multimedia material according to the present disclosure. As shown in Fig. 7, the method in this embodiment includes steps S702 to S710.

In step S702, a triggering operation of the user on a preview function is received.

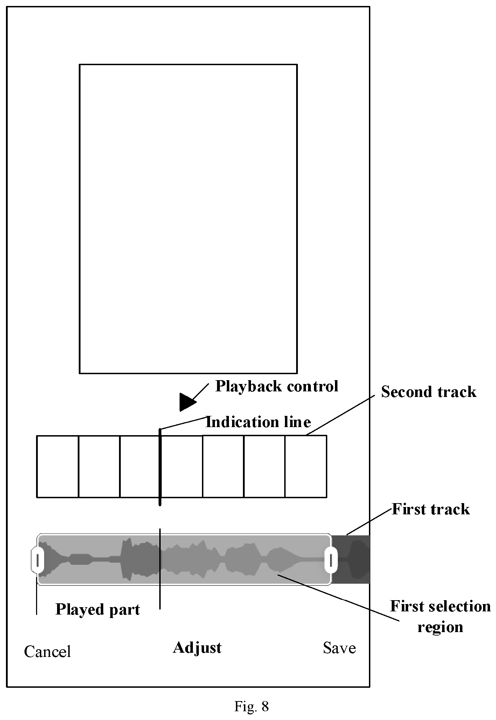

As shown in Fig. 8, the user may trigger the preview function through operations such as clicking a playback control and voice.

In step S704, a multimedia material synthesized by combining a first clip of the first multimedia material and a second clip of the second multimedia material is played, the first clip corresponds to the range of the first selected region and the second clip corresponds to the range of the second selected region .

In some embodiments, in a case where the second selected region is not displayed, that is, the entire second multimedia material is used for synthesis, the user's triggering operation on a playback function is received; and a multimedia material synthesized by combining a first clip of the first multimedia material and the second multimedia material is played and the first clip corresponds to the range of the first selected region.

The synthesized multimedia material may be loop-played. As shown in Fig. 8, a preview region may further be displayed in the editing interface, and the synthesized multimedia material may be played in the preview region. The synthesized multimedia material may also be played in a new window, which is not limited to the example given herein.

In step S706, a playback progress of the first clip is dynamically displayed in the first track, and a playback progress of the second clip is dynamically displayed in the second track.

Steps S704 and S706 may be executed in parallel.

For example, the playback progress may be displayed through animation or an indication identification. For example, as shown in Fig. 8, the first multimedia material is an audio, and the second multimedia material is a video. The playback progress may be displayed in the first track in the form of waveform animation, and the playback progress may be indicated in the second track by moving an indication line.

In step S708, an adjustment operation of the user on the range of the first selected region or the range of the second selected region is received during the playback.

Reference may be made to the foregoing embodiments for the adjustment operation on the range of the first selected region or the range of the second selected region, which will not be repeated herein.

In step S710, the playback is paused, the first selected region adjusted dynamically is displayed in the first track, and the second selected region adjusted dynamically is displayed in the second track, where the range of the second selected region is dynamically aligned with the range of the first selected region.

In some embodiments, a movement operation of the user on the information of the first multimedia material in the first track is received during the playback, and the playback is paused. The information of the first multimedia material moving dynamically may further be displayed in the first track. The first selected region is fixed in position relative to the first track. A movement operation of the user on the information of the second multimedia material in the second track is received during the playback, and the playback is paused. The information of the second multimedia material moving dynamically may further be displayed in the second track.

In some embodiments, a triggering operation of the user on an adjustment function of playback speed is received, and the synthesized multimedia material is played at an adjusted speed.

In some embodiments, a triggering operation of the user on a pause function is received, the playback is paused, a playback position of the first clip at the pause is dynamically displayed in the first track, and a playback position of the second clip at the pause is dynamically displayed in the second track.

In the method of the above embodiment, the user may view the effect of the synthesized multimedia material at any time, and the clips selected from the first multimedia material and the second multimedia material may be flexibly selected, thus improving the efficiency and accuracy of selection.

In some embodiments, a triggering operation of the user on a saving function is received; and a multimedia material synthesized by combining a clip of the first multimedia material and a clip of the second multimedia material synthesized by combining is saved and displayed. The clip of the first multimedia material and the clip of the second multimedia material corresponds to the range of the first selected region.

In a case where the second selected region is displayed, the clip of the second multimedia material corresponding to the range of the first selected region is the clip of the second multimedia material corresponding to the range of the second selected region, and in a case where the second selected region is not displayed, the clip of the second multimedia material corresponding to the range of the first selected region is the entire second multimedia material.

For example, in a scenario where the first multimedia material is added to the second multimedia material for synthesis, before the adding operation, the second multimedia material may be played in an original playback interface, and after the saving operation, the synthesized multimedia material may be displayed in the original playback interface after exiting the editing interface. In a case where the synthesized multimedia material has been previewed and played in the editing interface, the current playback position is recorded, and after returning to the original playback interface, the playback may be performed according to the current playback position. Since part of the synthesized multimedia material has been previewed, the remaining part is played after returning to the original playback interface, thus improving the efficiency and enhancing the user experience. An original playback position of the second multimedia material in the original playback interface may be recorded, and the playback is started from the original playback position after returning to the original playback interface.

In some embodiments, a triggering operation of the user on a cancel function is received; and the synthesized multimedia material is deleted.

For example, in a scenario where the first multimedia material is added to the second multimedia material for synthesis, before the adding operation, the second multimedia material may be played in an original playback interface, and after the canceling operation, the original playback interface may be returned to after exiting the editing interface. An original playback position of the second multimedia material in the original playback interface may be recorded, and the playback is started from the original playback position after returning to the original playback interface.

In some embodiments, a triggering operation of the user on an exit adjustment function is received, the information of the first multimedia material is displayed according to the duration of the first multimedia material in the first track, and the information of the second multimedia material is displayed according to the duration of the second multimedia material in the second track. The user may re-execute the triggering operation to re-select and display the first selected region automatically, or manually select and adjust the information of the first multimedia material in the first track.

In some embodiments, a triggering operation of the user on an exit adjustment function is received, the information of the first multimedia material in the first selected region is displayed in the first track, and the information of the second multimedia material in the second selected region is displayed in the second track.

In some embodiments, the first multimedia material or the second multimedia material or the synthesized multimedia material supports full screen display.

Taking the first multimedia material being an audio and the second multimedia material being a video as an example, in the scenario of adding music to the video, if the length of the audio is longer than that of the video, with the method according to the present disclosure, the information of the audio may be displayed in the first track, the information of the video may be displayed in the second track, and the first selected region of the audio may be automatically displayed in the first track, which is equal in length to the video, thus improving the efficiency of adjusting the audio. In addition, the second selected region of the video may be displayed in the second track. By adjusting either the range of the first selected region or the range of the second selected region, the ranges of the two regions may be dynamically adjusted at the same time. The ranges of the two regions may also be dynamically adjusted by moving the audio in the first track or moving the video in the second track, so that any clip of audio may be corresponded to and flexibly adjusted with any clip of video, thereby improving the accuracy and efficiency of multimedia material combination.

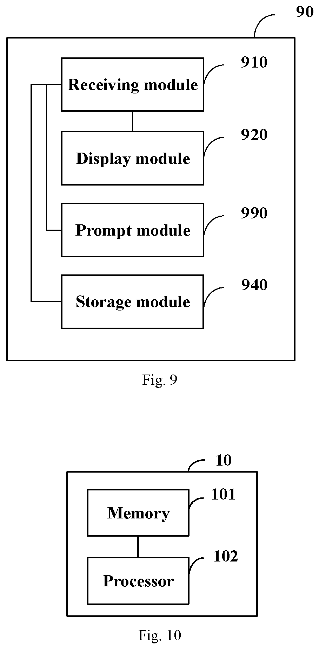

The present disclosure further provides an editing apparatus of multimedia material, which is described hereunder with reference to Fig. 9.

Fig. 9 is a structural diagram of some embodiments of an editing apparatus of multimedia material according to the present disclosure. As shown in Fig. 9, the apparatus 90 in this embodiment includes: a receiving module 910 and a display module 920.

The display module 920 is configured to display, in a first track, information of a first multimedia material according to a duration of the first multimedia material, and display, in a second track, information of a second multimedia material according to a duration of the second multimedia material, where the first multimedia material and the second multimedia material are multimedia materials to be synthesized, and the duration of the first multimedia material is greater than or equal to the duration of the second multimedia material.

The receiving module 910 is configured to receive a triggering operation of a user, where the triggering operation is configured to trigger an automatic selection for the information of the first multimedia material.

The display module 920 is further configured to display , in the first track, a first selected region automatically selected for the information of the first multimedia material, where a range of the first selected region is aligned with a display range of the information of the second multimedia material, and a duration of a clip of the first multimedia material corresponding to the range of the first selected region is equal to the duration of the second multimedia material.

In some embodiments, the receiving module 910 is further configured to receive a first adjustment operation of the user on the range of the first selected region; and the display module 920 is further configured to dynamically display in the first track, the first selected region adjusted by following the first adjustment operation, and display, in the second track, a second selected region dynamically adjusted by following an adjustment of the first selected region, where a range of the second selected region is dynamically aligned with the range of the first selected region.

In some embodiments, the display module 920 is further configured to display, in the second track, a second selected region of selection of the information of the second multimedia material, where the range of the first selected region is aligned with a range of the second selected region.

In some embodiments, the receiving module 910 is further configured to receive a second adjustment operation of the user on the range of the second selected region; and the display module 920 is further configured to dynamically, in the second track, display the second selected region adjusted by following the second adjustment operation, and display, in the first track, the first selected region dynamically adjusted by following an adjustment of the second selected region, where the range of the first selected region is dynamically aligned with the range of the second selected region

In some embodiments, the receiving module 910 is further configured to receive a movement operation of the user on the information of the first multimedia material in the first track relative to the first selected region; and the display module 920 is further configured to dynamically display the information of the first multimedia material moving relative to the first selected region in the first track, where the first selected region is fixed in position relative to the first track.

In some embodiments, the receiving module 910 is further configured to receive a movement operation of the user on the information of the second multimedia material in the second track relative to the second selected region; and the display module 920 is further configured to dynamically display the information of the second multimedia material moving relative to the second selected region in the second track, where the second selected region is fixed in position relative to the second track.

In some embodiments, the display module 920 is configured to determine whether the first multimedia material is trimmed or not; take a start point of the first multimedia material as a start point of the first selected region, in response to the first multimedia material being not trimmed, and determine an end point of the first selected region according to an end point of the information of the second multimedia material; take a start point of the trimmed first multimedia material as the start point of the first selected region, in response to the first multimedia material being trimmed, and determine the end point of the first selected region according to the start point of the first selected region and the duration of the second multimedia material and display the first selected region according to the start point and the end point of the first selected region.

In some embodiments, the display module 920 is configured to display part of information of the first multimedia material in the first selected region and part of information of the first multimedia material outside the first selected region with different display effects.

In some embodiments, the receiving module 910 is further configured to receive a triggering operation of the user on a preview function; and the display module 920 is further configured to play a multimedia material synthesized by combining a first clip of the first multimedia material and the second multimedia material, where the first clip corresponds to the range of the first selected region.

In some embodiments, the receiving module 910 is further configured to receive a triggering operation of the user on a preview function; and the display module 920 is further configured to play a multimedia material synthesized by combining a first clip of the first multimedia material and a second clip of the second multimedia material, where the first clip corresponds to the range of the first selected region and the second clip corresponds to the range of the second selected region.

In some embodiments, the display module 920 is further configured to dynamically display a playback progress of the first clip in the first track; and dynamically display a playback progress of the second clip in the second track.

In some embodiments, the receiving module 910 is further configured to receive an adjustment operation of the user on the range of the first selected region or the range of the second selected region during the playback; and the display module 920 is further configured to pause the playback, display the first selected region adjusted dynamically in the first track, and display the second selected region adjusted dynamically in the second track, where the range of the second selected region is dynamically aligned with the range of the first selected region.

In some embodiments, the apparatus 90 further includes: a prompt module 930, which is configured to output first prompt information, in response to the user adjusting an edge of the first selected region to an edge of the information of the first multimedia material; and/or output second prompt information, in response to the user adjusting the range of the first selected region to a first minimum range; and/or output third prompt information, in response to the user adjusting an edge of the second selected region to an edge of the information of the second multimedia material; and/or output fourth prompt information, in response to the user adjusting the range of the second selected region to a second minimum range.

In some embodiments, the apparatus 90 further includes: a storage module 940, where the receiving module 910 is further configured to receive a triggering operation of the user on a saving function; the storage module 940 is configured to save a multimedia material synthesized by combining a clip of the first multimedia material and a clip of the second multimedia material, where the clip of the first multimedia material and the clip of the second multimedia material corresponds to the range of the first selected region; and the display module 920 is further configured to display the multimedia material synthesized by combining the clip of the first multimedia material and the clip of the second multimedia material.

In some embodiments, the first multimedia material is a video, an audio, an image or an effect material, and the second multimedia material is a video, an audio, an image or an effect material.

In some embodiments, the information of the first multimedia material includes at least one of one or more images or texts corresponding to the first multimedia material; and the information of the second multimedia material includes at least one of one or more images or texts corresponding to the second multimedia material.

It should be noted that the above units are only logical modules divided according to specific functions implemented by them, and are not used to limit specific implementations, for example, they may be implemented in the form of software, hardware or a combination of software and hardware. In actual implementation, the above units may be implemented as independent physical entities, or may be implemented by a single entity (for example, a processor (CPU or DSP, etc.), an integrated circuit, etc.). In addition, the above units are indicated by dotted lines in the drawings to indicate that these units may not actually exist, and the operations/functions implemented by them may be implemented by the processing circuit itself.

In addition, although not shown, the device may further include a memory, which may store various information generated in operations by the device and each unit included in the device, programs and data for operations, data to be sent by the communication unit, etc. The memory may be a volatile memory and/or a non-volatile memory. For example, the memory may include but not limited to a random access memory (RAM), a dynamic random access memory (DRAM), a static random access memory (SRAM), a read-only memory (ROM), and a flash memory. Certainly, the memory may also be located outside the device. Optionally, although not shown, the device may also include a communication unit, which may be used to communicate with other apparatuses. In an example, the communication unit may be implemented in any suitable manner known in the art, for example, including communication components such as an antenna array and/or a radio frequency link, various types of interfaces, communication units, etc. Details are not described herein again. In addition, the device may further include other components not shown, such as a radio frequency link, a baseband processing unit, a network interface, a processor, a controller, etc. Details are not described herein again.

Some embodiments of the present disclosure further provide an electronic device. Fig. 10 shows a block diagram of some embodiments of an electronic device according to the present disclosure. For example, in some embodiments, the electronic device 10 may be various types of devices, for example, may include but not limited to mobile terminals such as a mobile phone, a notebook computer, a digital broadcast receiver, a PDA (personal digital assistant), a tablet computer, a PMP (portable multimedia player), a vehicle-mounted terminal (for example, a vehicle navigation terminal), etc., and fixed terminals such as a digital TV, a desktop computer, etc. For example, the electronic device 10 may include a display panel for displaying data and/or execution results used in the solution according to the present disclosure. For example, the display panel may be various shapes, such as a rectangular panel, an elliptical panel or a polygonal panel, etc. In addition, the display panel may be not only a flat panel, but also a curved panel or even a spherical panel.

As shown in Fig. 10, the electronic device 10 in this embodiment includes: a memory 101 and a processor 102 coupled to the memory 101. It should be noted that the components of the electronic device 10 shown in Fig. 10 are only exemplary and non-restrictive, and the electronic device 10 may further have other components according to actual application requirements. The processor 102 may control other components in the electronic device 10 to perform desired functions.

In some embodiments, the memory 101 is configured to store one or more computer-readable instructions. The processor 102 is configured to, when running the computer-readable instructions, implement the method according to any of the above embodiments when the computer-readable instructions are run by the processor 102. Reference may be made to the above embodiments for specific implementations and related explanation contents of the steps of the method, and details are not described herein again for the sake of redundancy.

For example, the processor 102 and the memory 101 may directly or indirectly communicate with each other. For example, the processor 102 and the memory 101 may communicate through a network. The network may include a wireless network, a wired network, and/or any combination of a wireless network and a wired network. The processor 102 and the memory 101 may also communicate with each other through a system bus, which is not limited in the present disclosure.

For example, the processor 102 may be embodied as various appropriate processors, processing apparatuses, etc., such as a central processing unit (CPU), a graphics processing unit (Graphics Processing Unit, GPU), a network processor (NP), etc.; and may also be a digital signal processor (DSP), an application specific integrated circuit (ASIC), a field programmable gate array (FPGA) or other programmable logic devices, a discrete gate or transistor logic device, or a discrete hardware component. The central processing unit (CPU) may be of X86 or ARM architecture or the like. For example, the memory 101 may include any combination of various forms of computer-readable storage media, such as a volatile memory and/or a non-volatile memory. The memory 101 may include, for example, a system memory, and the system memory has, for example, an operating system, an application program, a boot loader (Boot Loader), a database and other programs stored therein. Various applications, various data, etc. may also be stored in the storage medium.

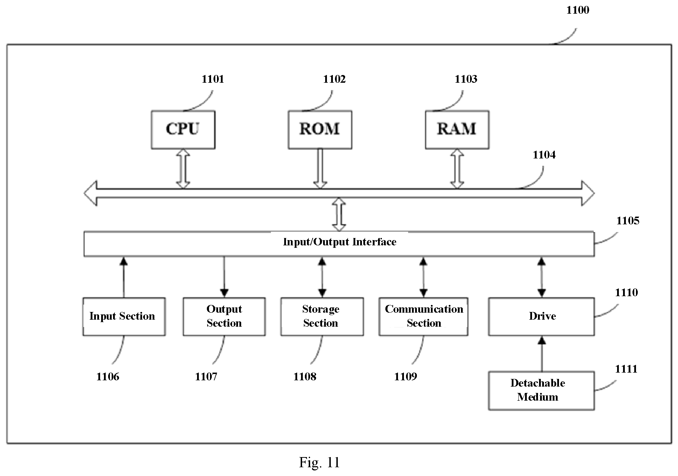

In addition, according to some embodiments of the present disclosure, in the case where various operations/processing according to the present disclosure are implemented by software and/or firmware, a program constituting the software may be installed from a storage medium or a network to a computer system having a dedicated hardware structure, such as the computer system (or electronic device) 1100 shown in Fig. 11, and the computer system may perform various functions, including the functions as described above, when installed with various programs. Fig. 11 is a block diagram showing an example structure of a computer system that may be used in an embodiment according to the present disclosure.

In Fig. 11, a central processing unit (CPU) 1101 performs various processes according to a program stored in a read-only memory (ROM) 1102 or a program loaded from a storage unit 1108 into a random access memory (RAM) 1103. In the RAM 1103, data required when the CPU 1101 performs various processes or the like is also stored according to needs. The central processing unit is only exemplary, and it may also be other types of processors, such as various processors as described above. The ROM 1102, the RAM 1103, and the storage unit 1108 may be various forms of computer-readable storage media, as described below. It should be noted that although the ROM 1102, the RAM 1103, and the storage unit 1108 are shown separately in Fig. 11, one or more of them may be combined or located in the same or different memories or storage modules.

The CPU 1101, the ROM 1102, and the RAM 1103 are connected to each other via a bus 1104. An input/output interface 1105 is also connected to the bus 1104.

The following components are connected to the input/output interface 1105: an input unit 1106 such as a touch screen, a touchpad, a keyboard, a mouse, an image sensor, a microphone, an accelerometer, a gyroscope, etc.; an output unit 1107 including a display such as a cathode ray tube (CRT), a liquid crystal display (LCD), a speaker, a vibrator, etc.; the storage unit 1108 including a hard disk, a magnetic tape, etc.; and a communication unit 1109 including a network interface card such as a LAN card, a modem, etc. The communication unit 1109 allows communication processing to be performed via a network such as the Internet. It is easy to understand that although various apparatuses or modules in the electronic device 1100 are shown in Fig. 11 to communicate through the bus 1104, they may also communicate through a network or other means, where the network may include a wireless network, a wired network, and/or any combination of a wireless network and a wired network.

A driver 1110 is also connected to the input/output interface 1105 according to needs. A removable medium 1111 such as a magnetic disk, an optical disc, a magneto-optical disc, a semiconductor memory, etc. is mounted on the driver 1110 according to needs, so that a computer program read therefrom is installed into the storage unit 1108 according to needs.

In the case where the above series of processes are implemented by software, a program constituting the software may be installed from a network such as the Internet or a storage medium such as the removable medium 1111.

According to an embodiment of the present disclosure, the process described above with reference to the flowchart may be implemented as a computer software program. For example, the embodiment of the present disclosure includes a computer program product, which includes a computer program carried on a computer-readable medium, where the computer program contains program code for performing the method shown in the flowchart. In such an embodiment, the computer program may be downloaded and installed from a network through the communication unit 1109, or installed from the storage unit 1108, or installed from the ROM 1102. When the computer program is executed by the CPU 601, the above-mentioned functions defined in the method of the embodiment of the present disclosure are executed.

It should be noted that, in the context of the present disclosure, a computer-readable medium may be a tangible medium that may contain or store a program for use by or in combination with an instruction execution system, apparatus or device. The computer-readable medium may be a computer-readable signal medium, a computer-readable storage medium, or any combination of the above two. The computer-readable storage medium may be, for example, but not limited to: an electrical, magnetic, optical, electromagnetic, infrared, or semiconductor system, apparatus or device, or any suitable combination of the above. More specific examples of the computer-readable storage medium may include, but not limited to: an electrically connected portable computer magnetic disk having one or more wires, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, a computer-readable storage medium may be any tangible medium that contains or stores a program, and the program may be used by or in combination with an instruction execution system, apparatus or device. In the present disclosure, a computer-readable signal medium may include a data signal propagated in a baseband or as a part of a carrier wave, and computer-readable program code is carried in the data signal. This propagated data signal may take a variety of forms, including but not limited to an electromagnetic signal, an optical signal, or any suitable combination of the above. The computer-readable signal medium may also be any computer-readable media other than the computer-readable storage medium, and the computer-readable signal medium may send, propagate or transmit a program used by or in combination with an instruction execution system, apparatus or device. The program code contained on the computer-readable medium may be transmitted by any suitable medium, including but not limited to: a wire, an optical cable, a radio frequency (RF), etc., or any suitable combination of the above.

The above computer-readable medium may be included in the above electronic device; or it may exist alone without being assembled into the electronic device.

In some embodiments, a computer program is further provided, including: instructions, the instructions, when executed by a processor, cause the processor to perform the method of any of the above embodiments. For example, the instructions may be embodied as computer program code.

In the embodiments of the present disclosure, computer program code for performing operations of the present disclosure may be written in one or more programming languages or a combination thereof, where the above programming languages include but not limited to object-oriented programming languages, such as Java, Smalltalk, C++, and also include conventional procedural programming languages, such as "C" language or similar programming languages. The program code may be executed entirely on a user's computer, partly executed on a user's computer, executed as an independent software package, partly executed on a user's computer and partly executed on a remote computer, or entirely executed on a remote computer or a server. In the case of involving a remote computer, the remote computer may be connected to a user's computer through any kind of network, including a local area network (LAN) or a wide area network (WAN), or it may be connected to an external computer (for example, connected by using Internet provided by an Internet service provider).

The flowcharts and block diagrams in the drawings illustrate the possibly implemented architectures, functions and operations of the system, method and computer program product according to various embodiments of the present disclosure. In this regard, each block in the flowchart or block diagram may represent a module, program segment, or part of code, which contains one or more executable instructions for implementing the specified logical functions. It should also be noted that, in some alternative implementations, the functions marked in the blocks may also occur in an order different from that marked in the drawings. For example, two blocks shown in succession may actually be performed substantially in parallel, or they may sometimes be performed in the reverse order, depending on the functions involved. It should also be noted that each block in the block diagram and/or flowchart, and a combination of the blocks in the block diagram and/or flowchart may be implemented by a dedicated hardware-based system that executes specified functions or operations, or may be implemented by a combination of dedicated hardware and computer instructions.

The modules, components or units involved in the embodiments of the present disclosure may be implemented by software or by hardware. Among them, names of the modules, components or units do not constitute a limitation on the modules, components or units pe se under certain circumstances.

The functions described above may be performed at least in part by one or more hardware logic components. For example, without limitation, exemplary hardware logic components that may be used include: a field programmable gate array (FPGA), an application specific integrated circuit (ASIC), an application specific standard product (ASSP), a system on chip (SOC), a complex programmable logical device (CPLD) and more.

According to some embodiments of the present disclosure, an editing method of multimedia material is provided, including: displaying, in a first track, information of a first multimedia material according to a duration of the first multimedia material, and displaying, in a second track, information of a second multimedia material according to a duration of the second multimedia material, where the first multimedia material and the second multimedia material are multimedia materials to be synthesized, and the duration of the first multimedia material is greater than or equal to the duration of the second multimedia material; receiving a triggering operation of a user, where the triggering operation is configured to trigger an automatic selection for the information of the first multimedia material; and displaying, in the first track, a first selected region automatically selected for the information of the first multimedia material, where a range of the first selected region is aligned with a display range of the information of the second multimedia material, and a duration of a clip of the first multimedia material corresponding to the range of the first selected region is equal to the duration of the second multimedia material.

In some embodiments, the method further includes: receiving a first adjustment operation of the user on the range of the first selected region; and dynamically displaying, in the first track, the first selected region adjusted by following the first adjustment operation, and displaying, in the second track, a second selected region dynamically adjusted by following an adjustment of the first selected region, where a range of the second selected region is dynamically aligned with the range of the first selected region.

In some embodiments, the method further includes: displaying, in the second track, a second selected region of selection of the information of the second multimedia material, where the range of the first selected region is aligned with a range of the second selected region.

In some embodiments, the method further includes: receiving a second adjustment operation of the user on the range of the second selected region; and dynamically, in the second track, displaying the second selected region adjusted by following the second adjustment operation, and displaying, in the first track, the first selected region dynamically adjusted by following an adjustment of the second selected region, where the range of the first selected region is dynamically aligned with the range of the second selected region.

In some embodiments, the method further includes: receiving a movement operation of the user on the information of the first multimedia material in the first track relative to the first selected region; and dynamically displaying the information of the first multimedia material moving relative to the first selected region in the first track, where the first selected region is fixed in position relative to the first track.

In some embodiments, the method further includes: receiving a movement operation of the user on the information of the second multimedia material in the second track relative to the second selected region; and dynamically displaying the information of the second multimedia material moving relative to the second selected region in the second track, where the second selected region is fixed in position relative to the second track.

In some embodiments, the displaying, in the first track, the first selected region automatically selected for the information of the first multimedia material includes: determining whether the first multimedia material is trimmed or not; taking a start point of the first multimedia material as a start point of the first selected region, in response to the first multimedia material being not trimmed, and determining an end point of the first selected region according to an end point of the information of the second multimedia material; taking a start point of the trimmed first multimedia material as the start point of the first selected region, in response to the first multimedia material being trimmed, and determining the end point of the first selected region according to the start point of the first selected region and the duration of the second multimedia material; and displaying the first selected region according to the start point and the end point of the first selected region.

In some embodiments, the displaying, in the first track, the first selected region automatically selected for the information of the first multimedia material includes: displaying part of information of the first multimedia material in the first selected region and part of information of the first multimedia material outside the first selected region with different display effects.

In some embodiments, the method further includes: receiving a triggering operation of the user on a preview function; and playing a multimedia material synthesized by combining a first clip of the first multimedia material and the second multimedia material, where the first clip corresponds to the range of the first selected region.

In some embodiments, the method further includes: receiving a triggering operation of the user on a preview function; and playing a multimedia material synthesized by combining a first clip of the first multimedia material and a second clip of the second multimedia material, where the first clip corresponds to the range of the first selected region and the second clip corresponds to the range of the second selected region.

In some embodiments, the method further includes at least one of the following: dynamically displaying a playback progress of the first clip in the first track; or dynamically displaying a playback progress of the second clip in the second track.

In some embodiments, the method further includes: receiving an adjustment operation of the user on the range of the first selected region or the range of the second selected region during a playback; and pausing the playback, displaying the first selected region adjusted dynamically in the first track, and displaying the second selected region adjusted dynamically in the second track, where the range of the second selected region is dynamically aligned with the range of the first selected region.

In some embodiments, the method further includes at least one of the following: outputting first prompt information, in response to the user adjusting an edge of the first selected region to an edge of the information of the first multimedia material; or outputting second prompt information, in response to the user adjusting the range of the first selected region to a first minimum range.

In some embodiments, the method further includes at least one of the following: outputting third prompt information, in response to the user adjusting an edge of the second selected region to an edge of the information of the second multimedia material; or outputting fourth prompt information, in response to the user adjusting the range of the second selected region to a second minimum range.

In some embodiments, the method further includes: receiving a triggering operation of the user on a saving function; saving a multimedia material synthesized by combining a clip of the first multimedia material and a clip of the second multimedia material, where the clip of the first multimedia material and the clip of the second multimedia material corresponds to the range of the first selected region; and displaying the synthesized multimedia material.

In some embodiments, the first multimedia material is a video, an audio, an image or an effect material, and the second multimedia material is a video, an audio, an image or an effect material.

In some embodiments, the information of the first multimedia material includes at least one of one or more images or texts corresponding to the first multimedia material; and the information of the second multimedia material includes at least one of one or more images or texts corresponding to the second multimedia material.

According to other embodiments of the present disclosure, an editing apparatus of multimedia material is provided, including: a receiving module and a display module, where: the display module is configured to display, in a first track, information of a first multimedia material according to a duration of the first multimedia material, and display, in a second track, information of a second multimedia material according to a duration of the second multimedia material, where the first multimedia material and the second multimedia material are multimedia materials to be synthesized, and the duration of the first multimedia material is greater than or equal to the duration of the second multimedia material; the receiving module is configured to receive a triggering operation of a user, where the triggering operation is configured to trigger an automatic selection for the information of the first multimedia material; and the display module is further configured to display , in the first track, a first selected region automatically selected for the information of the first multimedia material, where a range of the first selected region is aligned with a display range of the information of the second multimedia material, and a duration of a clip of the first multimedia material corresponding to the range of the first selected region is equal to the duration of the second multimedia material.

According to still other embodiments of the present disclosure, an electronic device is provided, including: a processor; and a memory coupled to the processor and configured to store instructions, where the instructions, when executed by the processor, cause the processor to perform the editing method of multimedia material according to any of the above embodiments.

According to yet other embodiments of the present disclosure, a computer-readable storage medium is provided, where a computer program is stored on the computer-readable storage medium, where the computer program, when executed by a processor, implements the editing method of multimedia material according to any of the above embodiments.

According to still other embodiments of the present disclosure, a computer program is provided, including: instructions, the instructions, when executed by a processor, cause the processor to perform the editing method of multimedia material according to any of the embodiments of the present disclosure.

According to some embodiments of the present disclosure, a computer program product is provided, including instructions, the instructions, when executed by a processor, implement the editing method of multimedia material according to any of the embodiments of the present disclosure.

The above description is only some embodiments of the present disclosure and an explanation of applied technical principles. Those skilled in the art should understand that the scope of disclosure involved in the present disclosure is not limited to technical solutions formed by specific combinations of the above technical features, and should also cover other technical solutions formed by any combination of the above technical features or equivalent features thereof without departing from the above concept of disclosure. For example, the above features and the technical features provided in the present disclosure (but not limited to) with similar functions may be replaced each other to form a technical solution.

In the description provided herein, many specific details are set forth. However, it should be understood that the embodiments of the present disclosure may be implemented without these specific details. In other cases, well-known methods, structures and techniques are not shown in detail in order not to obscure the understanding of the description.

In addition, although operations are depicted in a specific order, this should not be understood as requiring the operations to be performed in the specific order shown or in a sequential order. Under certain circumstances, multitasking and parallel processing may be beneficial. Similarly, although several specific implementation details are included in the above discussion, these should not be construed as limiting the scope of the present disclosure. Certain features described in the context of separate embodiments may also be implemented in a single embodiment in combination. On the contrary, various features described in the context of a single embodiment may also be implemented in multiple embodiments individually or in any suitable sub-combination.

Although some specific embodiments of the present disclosure have been described in detail by way of examples, those skilled in the art should understand that the above examples are only for illustration, rather than limiting the scope of the present disclosure. Those skilled in the art should understand that the above embodiments may be modified without departing from the scope and spirit of the present disclosure. The scope of the present disclosure is defined by the appended claims.

## Claims

**1.** An editing method of multimedia material, comprising:
displaying, in a first track, information of a first multimedia material according to a duration of the first multimedia material, and displaying, in a second track, information of a second multimedia material according to a duration of the second multimedia material, wherein the first multimedia material and the second multimedia material are multimedia materials to be synthesized, and the duration of the first multimedia material is greater than or equal to the duration of the second multimedia material;
receiving a triggering operation of a user, wherein the triggering operation is configured to trigger an automatic selection for the information of the first multimedia material; and
displaying, in the first track, a first selected region automatically selected for the information of the first multimedia material, wherein a range of the first selected region is aligned with a display range of the information of the second multimedia material, and a duration of a clip of the first multimedia material corresponding to the range of the first selected region is equal to the duration of the second multimedia material.

**2.** The editing method of claim 1, further comprising:
receiving a first adjustment operation of the user on the range of the first selected region; and
dynamically displaying, in the first track, the first selected region adjusted by following the first adjustment operation, and displaying, in the second track, a second selected region dynamically adjusted by following an adjustment of the first selected region, wherein a range of the second selected region is dynamically aligned with the range of the first selected region.

**3.** The editing method of claim 1 or 2, further comprising:
displaying, in the second track, a second selected region of selection of the information of the second multimedia material, wherein the range of the first selected region is aligned with a range of the second selected region.

**4.** The editing method of claim 3, further comprising:
receiving a second adjustment operation of the user on the range of the second selected region; and
dynamically, in the second track, displaying the second selected region adjusted by following the second adjustment operation, and displaying, in the first track, the first selected region dynamically adjusted by following an adjustment of the second selected region, wherein the range of the first selected region is dynamically aligned with the range of the second selected region.

**5.** The editing method of any of claims 1-4, further comprising:
receiving a movement operation of the user on the information of the first multimedia material in the first track relative to the first selected region; and
dynamically displaying the information of the first multimedia material moving relative to the first selected region in the first track, wherein the first selected region is fixed in position relative to the first track.

**6.** The editing method of claim 3 or 4, further comprising:
receiving a movement operation of the user on the information of the second multimedia material in the second track relative to the second selected region; and
dynamically displaying the information of the second multimedia material moving relative to the second selected region in the second track, wherein the second selected region is fixed in position relative to the second track.

**7.** The editing method of any of claims 1-6, wherein the displaying, in the first track, the first selected region automatically selected for the information of the first multimedia material comprises:
determining whether the first multimedia material is trimmed or not;
taking a start point of the first multimedia material as a start point of the first selected region, in response to the first multimedia material being not trimmed, and determining an end point of the first selected region according to an end point of the information of the second multimedia material;
taking a start point of the trimmed first multimedia material as the start point of the first selected region, in response to the first multimedia material being trimmed, and determining the end point of the first selected region according to the start point of the first selected region and the duration of the second multimedia material; and
displaying the first selected region according to the start point and the end point of the first selected region.

**8.** The editing method of any of claims 1-7, wherein displaying, in the first track, a first selected region automatically selected for the information of the first multimedia material comprises:
displaying part of information of the first multimedia material in the first selected region and part of information of the first multimedia material outside the first selected region with different display effects.

**9.** The editing method of any of claims 1-8, further comprising:
receiving a triggering operation of the user on a preview function; and
playing a multimedia material synthesized by combining a first clip of the first multimedia material and the second multimedia material, wherein the first clip corresponds to the range of the first selected region.

**10.** The editing method of any of claims 2-4, 6, further comprising:
receiving a triggering operation of the user on a preview function; and
playing a multimedia material synthesized by combining a first clip of the first multimedia material and a second clip of the second multimedia material, wherein the first clip corresponds to the range of the first selected region and the second clip corresponds to the range of the second selected region.

**11.** The editing method of claim 10, further comprising at least one of the following:
dynamically displaying a playback progress of the first clip in the first track; or
dynamically displaying a playback progress of the second clip in the second track.

**12.** The editing method of claim 11, further comprising:
receiving an adjustment operation of the user on the range of the first selected region or the range of the second selected region during a playback; and
pausing the playback, displaying the first selected region adjusted dynamically in the first track, and displaying the second selected region adjusted dynamically in the second track, wherein the range of the second selected region is dynamically aligned with the range of the first selected region.

**13.** The editing method of claim 2, further comprising at least one of the following:
outputting first prompt information, in response to the user adjusting an edge of the first selected region to an edge of the information of the first multimedia material; or
outputting second prompt information, in response to the user adjusting the range of the first selected region to a first minimum range.

**14.** The editing method of claim 4, further comprising at least one of the following:
outputting third prompt information, in response to the user adjusting an edge of the second selected region to an edge of the information of the second multimedia material; or
outputting fourth prompt information, in response to the user adjusting the range of the second selected region to a second minimum range.

**15.** The editing method of any of claims 1-14, further comprising:
receiving a triggering operation of the user on a saving function;
saving a multimedia material synthesized by combining a clip of the first multimedia material and a clip of the second multimedia material, wherein the clip of the first multimedia material and the clip of the second multimedia material corresponds to the range of the first selected region; and
displaying the synthesized multimedia material.

**16.** The editing method of any of claims 1-15, wherein the first multimedia material is a video, an audio, an image or an effect material, and the second multimedia material is a video, an audio, an image or an effect material.

**17.** The editing method of any of claims 1-16, wherein:
the information of the first multimedia material comprises at least one of one or more images or texts corresponding to the first multimedia material; and
the information of the second multimedia material comprises at least one of one or more images or texts corresponding to the second multimedia material.

**18.** An editing apparatus of multimedia material, comprising: a receiving module and a display module, wherein:
the display module is configured to display, in a first track, information of a first multimedia material according to a duration of the first multimedia material, and display, in a second track, information of a second multimedia material according to a duration of the second multimedia material, wherein the first multimedia material and the second multimedia material are multimedia materials to be synthesized, and the duration of the first multimedia material is greater than or equal to the duration of the second multimedia material;
the receiving module is configured to receive a triggering operation of a user, wherein the triggering operation is configured to trigger an automatic selection for the information of the first multimedia material; and
the display module is further configured to display , in the first track, a first selected region automatically selected for the information of the first multimedia material, wherein a range of the first selected region is aligned with a display range of the information of the second multimedia material, and a duration of a clip of the first multimedia material corresponding to the range of the first selected region is equal to the duration of the second multimedia material.

**19.** An electronic device, comprising:
a processor; and
a memory coupled to the processor and configured to store instructions, the instructions, when executed by the processor, cause the processor to perform the editing method of multimedia material of any of claims 1-17.

**20.** A computer-readable storage medium, wherein a computer program is stored on the computer-readable storage medium, wherein the computer program, when executed by a processor, implements steps of the editing method of multimedia material of any of claims 1-17.

**22.** A computer program, comprising instructions, when the instructions are executed by a processor, the processor is caused to implement the editing method of multimedia material of any of claims 1-17.

**23.** A computer program product, comprising instructions, when the instructions are executed by a processor, the processor is caused to implement the editing method of multimedia material of any of claims 1-17.
